# EUROPÄISCHE PATENTSCHRIFT

(11) **EP 2 977 300 B1**
(45) Veröffentlichungstag und Bekanntmachung des Hinweises auf die Patenterteilung: **28.02.2018**
(21) Anmeldenummer: 15169769.5
(22) Anmeldetag: 29.05.2015
(51) Int. Cl.: B62D 55/112, B62D 55/30

(54) **LANDWIRTSCHAFTLICHES FAHRZEUG**
AGRICULTURAL VEHICLE
VEHICULE AGRICOLE

(30) Priorität: 25.07.2014 DE 102014110551
(43) Veröffentlichungstag der Anmeldung: 27.01.2016
(73) Patentinhaber: CLAAS Industrietechnik GmbH, 33106 Paderborn (DE)
(72) Erfinder: Obermeier-Hartmann, Robert, 33142 Büren (DE); Schulze Zumkley, Hendrik, 33397 Rietberg (DE); Schulte, Thomas, 33129 Delbrück (DE); Hammacher, Carolin, 33102 Paderborn (DE); Satzler, Robert L., PRINCEVILLE, IL, 61559 (US); Janzen, David C., Metamora IL, 61548 (US)
(74) Vertreter: Budach, Steffen

(56) Entgegenhaltungen:
- GB-A- 2 301 569
- US-A- 5 503 238

## Beschreibung

Die Erfindung betrifft ein landwirtschaftliches Fahrzeug, insbesondere einen Schlepper oder eine Erntemaschine gemäß dem Oberbegriff des Anspruchs 1.

Es ist bekannt, landwirtschaftliche Fahrzeuge wie Schlepper oder Erntemaschinen mit Raupenlaufwerken auszustatten. Raupenlaufwerke bieten wegen deren größerer Aufstandsfläche gegenüber Rädern eine höhere Zugkraftübertragung bei geringerem Schlupf und führen zu einer geringeren Bodenverdichtung. Die Bauformen auf dem Markt erhältlicher Raupenschlepper lassen sich gliedern in knickgelenkte Vierraupenschlepper, Zweiraupenschlepper und Halbraupenschlepper.

Knickgelenkte Vierraupenschlepper sind üblicherweise in der oberen Leistungsklasse angesiedelt und schon aufgrund deren Gewichts und Größe weniger für Transportaufgaben bzw. leichtere Einsätze geeignet.

Zweiraupenschlepper weisen - bezogen auf eine Fahrzeuglängsachse - beidseitig des Fahrzeugs jeweils ein Raupenlaufwerk zur Abstützung des Fahrzeugs gegenüber dem Boden auf (Vollraupenbauweise). Zumeist können sich die Raupenlaufwerke gegenüber dem Fahrzeugrahmen unter geringem Winkel um eine Fahrzeugquerachse verdrehen, wobei der Fahrzeugrahmen weitgehend identisch mit dem eines entsprechenden Radschleppers gestaltet sein kann. Lediglich beispielhaft sei in diesem Zusammenhang verwiesen auf WO1998/40266. Zweiraupenschlepper müssen kopflastig ausgelegt sein, um im Arbeitseinsatz unter Zugkraft eine gleichmäßige Druckverteilung unter den Raupenlaufwerken zu erzielen. Eine gleichmäßige Druckverteilung ist insbesondere bei Zugarbeiten erwünscht, weil nur damit das volle Potential hinsichtlich Triebkraftübertragung und Bodenschonung genutzt werden kann. In der dazu notwendigen Kopflastigkeit aber liegt ein Nachteil herkömmlicher Zweiraupenschlepper. Denn zur Erzielung der genannten Vorteile ist eine gute Abstimmung auf den jeweiligen Zugwiderstand des angehängten Arbeitsgeräts erforderlich. Weil aber in der Praxis der Zugwiderstand zwischen verschiedenen Arbeitsgeräten und/oder abhängig von den jeweiligen Arbeitsbedingungen (z.B. Bodeneigenschaften, Bearbeitungstiefe, Fahrgeschwindigkeit etc.) stark schwanken kann, muss ein Anwender dies durch das Anbringen einer geeigneten Frontballastierung am Fahrzeug vor Fahrtantritt ausgleichen. Bei während des Betriebs schwankenden Zugkräften ist eine korrekte Ballastierung nicht mehr möglich. Wenn das kopflastig ausgelegte Fahrzeug über asphaltierte Straßen fährt, werden die - in der Regel aus Gummi gefertigten - Stollen des Raupenbands beim Einlaufen in den Latsch stark gebremst und gestaucht, was zu hohem Verschleiß und damit verbundenen erhöhten Betriebskosten des Fahrzeugs führt.

Bei Halbraupenschleppern handelt es sich zumeist um umgebaute Radmaschinen, bei denen beispielsweise die hinteren Räder durch Raupenlaufwerke ersetzt sind. Durch die geänderte Übersetzung erfolgt eine starke Reduzierung der Höchstgeschwindigkeit. Bei allradgetriebenen Ackerschleppern müssen wegen der festen Übersetzung zwischen Vorder- und Hinterachse auch vorn Raupenlaufwerke montiert werden. In diesem Zusammenhang sei beispielsweise verwiesen auf US 2007/0261898 A1. Neben einem veränderten Federverhalten des Gesamtfahrzeugs muss eine geringere Betriebsfestigkeit akzeptiert werden.

Aus der gattungsgemäßen GB 2 301 569 A ist ein Fahrwerk für Kettenfahrzeuge oder landwirtschaftliche Maschinen, insbesondere für Fahrzeuge mit Ketten oder Bändern aus elastischem Material, bekannt. Das Fahrwerk besteht aus einem Chassis mit Antriebsrädern, Leiträdern und Laufrollen, wobei die Laufrollen jeder Fahrspur des Fahrzeuges einzeln oder auch zu Mehrfachrollensätzen vereinigt am Chassis um quer zur Fahrzeuglängsachse angeordnete Gelenkachsen schwenkbar sind. Dazu sind diese an Schwingen gelagert, die am Chassis angelenkt sind, so dass bei einem Überfahren von Bodenunebenheiten einen gleichmäßiger Druck zwischen Raupe und Untergrund erreicht wird.
Aus WO 2013/113484 A2 ist ein weiteres Konzept für ein Halbraupenfahrzeug bekannt. Hierbei dient das (hintere) Raupenlaufwerk als Antriebselement. Die Vorderachse (ausgeführt als Radachse) dient nur zur Abstützung von Vertikalkräften und als Lenkunterstützung. Das Raupenlaufwerk ist bei diesem Zweiachsfahrzeug pendelnd aufgehängt und verfügt über eine innere Endübersetzung. Bei Triebkraftgenerierung kommt es damit zu einem Aufstellen der Raupe. Dies wird durch geregelten Gegendruck eines Hydraulikzylinders vermieden. Die Vorderachse wird zum einen bei Aufbringung von Zugkraft, zum anderen durch die Kraft des Hydraulikzylinders entlastet. Damit besteht die Möglichkeit die Druckverteilung unter dem Raupenlaufwerk bei Feldarbeit konstant zu halten. Bei Straßenfahrt hingegen kann die Hydraulikkraft umgekehrt und somit die vordere Umlenkrolle des Raupenlaufwerks entlastet werden. Die Vorderachse (Radachse) nimmt entsprechend mehr Last auf. Dies hat ein sanfteres Einlaufen der Stollen zur Folge und reduziert damit den Verschleiß. Gegenüber dem klassischen Zweiraupenschlepper bietet dieses Konzept sowohl auf nachgiebigem als auch hartem Untergrund Vorteile. Die Vorderachse reduziert zusätzlich Nickschwingungen und erhöht damit den Fahrkomfort.

Da das in WO 2013/113484 A2 beschriebene Fahrzeug über eine nicht angetriebene Vorderachse verfügt, besteht auch hier der Nachteil einer notwendigen präzisen Ballastierung. Ideal für die Zugleistungseffizienz wäre eine Vorderachslast gleich null. In diesem Fall besteht jedoch die Gefahr, dass das Fahrzeug nach hinten kippen könnte, weshalb die Vorderachse in geringem Umfang belastet bleiben muss. Diese Last kann jedoch nicht zur Triebkraftübertragung genutzt werden und kann bei zu kleiner Bereifung den Boden verdichten. Es wäre denkbar die Vorderachse ebenfalls anzutreiben. Die Einstellung einer aufgrund der unterschiedlichen Triebkraftcharakteristiken von Rad und Raupe dazu erforderlichen Voreilung wäre jedoch aufwendig, zumal landwirtschaftliche Schlepper in der Regel nicht mit einem Längsdifferential ausgestattet sind.

Neben einem Hydraulikelement am Raupenlaufwerk verfügt das Fahrzeug gemäß WO 2013/113484 A2 über eine vollwertige Lenkachse. Das Fahrzeug ist wegen der geringen anzustrebenden Vorderachslast mit einer Differentiallenkung in der Hinterachse ausgestattet, die mit der Achsschenkellenkung der Vorderachse synchronisiert werden muss. Vor den geschilderten Aspekten ist die Komplexität des Fahrzeugs insgesamt hoch.

Es ist eine Aufgabe der vorliegenden Erfindung, ein Fahrzeug der eingangs genannten Art anzugeben, das mit überschaubarem konstruktivem Aufwand eine gleichmäßige Abstützung über einen Großteil der Laufwerkslänge auch bei unterschiedlichen Ballastierungen und Zugkräften ermöglicht, wobei ein verringerter Verschleiß des Raupenbands bei Straßenfahrt sowie allgemein eine Steigerung des Fahrkomforts angestrebt werden.

Die Aufgabe wird gelöst durch ein Fahrzeug mit den Merkmalen des Anspruchs 1. Dieses zeichnet sich dadurch aus, dass sämtliche Rollen des Raupenlaufwerks gegenüber dem Laufwerkkörper gefedert sind, indem einer Rolle oder einer Gruppe von Rollen jeweils ein fluidbeaufschlagbares Federelement zu deren Federung gegenüber dem Laufwerkkörper zugeordnet.

Durch die erfindungsgemäß vorgesehene Federung sämtlicher Rollen gegenüber dem Laufwerkkörper kann das Fahrzeuggewicht in einem weiten Bereich, nämlich über die gesamte wirksame Länge des Raupenfahrwerks, auch bei unterschiedlichen Ballastierungen und Zugkräften gleichmäßig aufgenommen und am Boden abgestützt werden. Gegenüber klassischen Zweiraupenschleppern lässt sich die Gefahr von Bodenverdichtung durch unpräzise Ballastierung so deutlich verringern und die Fähigkeit Triebkraft zu übertragen wird erhöht. Indem erfindungsgemäß einer Rolle oder einer Gruppe von Rollen jeweils ein fluidbeaufschlagbares Federelement zu deren Federung gegenüber dem Laufwerkkörper zugeordnet ist, lässt sich das Federungsverhalten des Fahrzeugs gezielt beeinflussen. Denn gegenüber Stahl- oder Gummifedern, deren Kennlinien stets dem höchsten Lastfall genügen müssen, bieten fluidbeaufschlagbare Federelemente den Vorteil einer weicheren Abstimmung. Zudem lassen sich diese einfach der Last anpassen und lässt sich deren Dämpfung in weitem Maße variieren. Bevorzugt kommen dabei sogenannte Hydrops zum Einsatz, d.h. hydropneumatische Federelemente, bevorzugt mit Niveauregelung. Der Einsatz fluidbeaufschlagbarer Federelemente ermöglicht auf vorteilhafte Weise eine Einflussnahme auf die wirkenden Auflagekräfte, um so einen Teil des Raupenlaufwerks bedarfsweise gezielt zu ent- oder belasten. Daraus ergibt sich beispielsweise bei Straßenfahrt ein verringerter Stollenverschleiß oder bei Zugarbeiten eine gleichmäßigere Druckverteilung unter dem Raupenfahrwerk, was wiederum den Boden schont und die Zugkrafteffizienz erhöht. Zudem ermöglicht eine derartige Federung der Rollen allgemein eine Steigerung des Fahrkomforts, da eine Lastanpassung möglich ist und überhaupt die Federcharakteristik veränderlich ist. Daneben bewirkt die verhältnismäßig große Laufwerkslänge (Vollraupenbauweise) eine geringe Anfälligkeit des Fahrzeugs gegenüber Nickschwingungen.

Verschiedene konstruktive Gestaltungen des Fahrzeugs sind denkbar. Gemäß einer bevorzugten Weiterbildung der Erfindung ist der Laufwerkkörper eines Raupenlaufwerks an die Fahrzeugstruktur angebaut. In diesem Fall handelt es sich bei dem Laufwerkkörper jeweils um eine eigene Baueinheit, an welche die zugehörigen Umlenk- und Stützrollen des Raupenlaufwerks angelenkt sind und welche - beispielsweise über eine Flanschverbindung - seitlich an die Fahrzeugstruktur angebaut ist.

Gemäß einer dazu alternativen Ausgestaltung ist es denkbar, dass der Laufwerkkörper eines Raupenlaufwerks integraler Bestandteil der Fahrzeugstruktur ist. In diesem Fall ist der Laufwerkkörper eben nicht als eigene Baueinheit ausgeführt, sondern ist Teil der Fahrzeugstruktur. Die Umlenk- und Stützrollen sind somit an die Fahrzeugstruktur angelenkt, beispielsweise mit Hilfe von Wellen und/oder Achsen, die gegenüber der Fahrzeugstruktur gelagert sind und seitlich aus dieser hinausragen.

Ganz allgemein, insbesondere unabhängig von der Gestaltung von Fahrzeugstruktur und Laufwerkkörper sieht eine vorteilhafte Weiterbildung des Fahrzeugs Mittel zur Verteilung eines vom Fahrzeug ausgehenden Auflagedrucks auf einzelne Federelemente und/oder auf eine oder mehrere Gruppen von Federelementen vor. Es kann sich grundsätzlich um jedwede Mittel handeln, mit denen sich ein Auflagedruck, insbesondere verursacht durch die Gewichtskraft des Fahrzeugs, verteilen lässt.

Vorteilhaft verfügt das Fahrzeug über ein Fluidsystem zur Versorgung der fluidbeaufschlagbaren Federelemente, bei dem sich bestimmte, insbesondere ereignisabhängig auswählbare Federelemente in einen separaten Fluidkreis zusammenschalten lassen (oder permanent zusammengeschaltet sind), um eine Federungseinheit zu bilden. Durch Zusammenschaltung mehrerer Federelemente in einen - für sich abgeschlossenen - Fluidkreis herrscht an allen der so gebildeten Federungseinheit zugehörigen Federelementen ein gleicher Fluiddruck, so dass sich in vorteilhafter Weise automatisch (selbsttätig) eine gleichmäßige Lastverteilung auf die betreffenden Federelemente bzw. diesen zugehörige Rollen einstellt.

Verschiedene Gestaltungen der Anordnung sind denkbar. Vorteilhaft weist eine durch einen gemeinsamen Fluidkreis gebildete Federungseinheit einen Pendelpunkt auf, der eine virtuelle Achse des Fahrzeugs bildet. In diesem Fall simuliert die hydropneumatische Federung eine um diesen Pendelpunkt schwenkbare Achse.

Zur Einflussnahme auf die Lastverteilung des Fahrzeugs ist zumindest ein Federelement eines Raupenlaufwerks einer vorderen Federungseinheit zugeordnet, um eine virtuelle Vorderachse zu bilden, und ist zumindest ein Federelement desselben Raupenlaufwerks einer hinteren Federungseinheit zugeordnet, um eine virtuelle Hinterachse zu bilden.
Das beschriebene Federungskonzept lässt sich vielfältig ausgestalten. Eine vorteilhafte Weiterbildung sieht vor, dass sich wenigstens eine Stützrolle eines Raupenlaufwerks in Abhängigkeit eines Betriebsparameters des Fahrzeugs durch Zuschalten des zugehörigen Federelements zu einem entsprechenden Fluidkreis entweder der virtuellen Vorderachse oder der virtuellen Hinterachse zuordnen lässt. Durch die veränderliche Zuordnung der (wenigstens einen) Stützrolle zu entweder Vorder- oder Hinterachse lässt sich ein zwischen den Achsen möglicherweise bestehendes Druckgefälle durch einen Druckausgleich verringern. Als dabei heranzuziehende Betriebsparameter können beispielsweise dienen: Fluiddruck in den Federelementen von Vorder- bzw. Hinterachse und/oder Stützrolle, Fahrgeschwindigkeit des Fahrzeugs. Vorteilhaft ist eine Hysterese vorgesehen, um ein ständiges Umschalten bei geringen Schwankungen um einen Grenzwert zu verhindern. Weiterhin sind zweckmäßigerweise einzelnen Federelementen Sensoren zur Druckerfassung zugeordnet, wobei die Zuordnung der Stützrolle abhängig vom so erfassten Druckzustand eines oder mehrerer Federelemente erfolgt.

Vorteilhaft ist das Fahrzeug ganz allgemein mit Mitteln zur Beeinflussung einer Druckverteilung zwischen vorderen Federelementen und hinteren Federelementen des Raupenlaufwerks in Abhängigkeit erfasster Betriebsparameter des Fahrzeugs, wie insbesondere der Zugkraft, ausgestattet. Abhängig vom Betriebszustand des Fahrzeugs lässt sich damit der Auflagedruck unterhalb des Raupenlaufwerks anpassen, um die Traktion oder die Zugkrafteffizienz zu erhöhen, oder um den Boden zu schonen.

Technisch umsetzen lässt sich dies vorteilhaft, indem das Fahrzeug über Mittel zur Beeinflussung der Fluiddrücke separater Fluidkreise untereinander verfügt, insbesondere einem der virtuellen Vorderachse zugehörigen Fluidkreis und einem der virtuellen Hinterachse zugehörigen Fluidkreis, und/oder zur Beeinflussung des Fluiddrucks innerhalb eines Fluidkreises, jeweils bevorzugt in Abhängigkeit erfasster Betriebsparameter des Fahrzeugs. Als Betriebsparameter können hier beispielsweise dienen: Zugkraft des Fahrzeugs, Fluiddruck in den Federelementen von Vorder- bzw. Hinterachse und/oder Stützrolle, Fahrgeschwindigkeit des Fahrzeugs.

Zur Reduzierung des Verschleißes des Raupenbandes ist das Fahrzeug vorteilhaft in einem Straßenmodus betreibbar, in welchem Federelemente der virtuellen Vorderachse mit einem gegenüber einem Feldmodus verminderten Druck beaufschlagt werden.

Die Effizienz und Traktion des Fahrzeugs während des Arbeitseinsatzes, insbesondere bei Zugarbeit, lassen sich vorteilhaft erhöhen, indem Federelemente der virtuellen Vorderachse mit einem von einer aufgebrachten Zugkraft des Fahrzeugs abhängigen Druck beaufschlagt werden können, insbesondere mit dem Ziel die Summe wirksamer Momente am Raupenlaufwerk betragsmäßig zu verringern, vorzugsweise zu null zu bringen.

Indem sich ein hinteres Federelement des Raupenlaufwerks durch individuelle Ansteuerung mit erhöhtem Fluiddruck beaufschlagen lässt, kann auf weiterhin vorteilhafte Weise im Fall einer besonders hohen Zugkraft ein Aufstellen des Raupenlaufwerks verhindert werden. Hintergrund dieser Funktion ist, dass sich durch eine Druckbeaufschlagung des hinteren Federelements ein hinterer Pendelpunkt des Raupenlaufwerks weiter nach hinten verschiebt, wodurch das Raupenlaufwerk auch bei hoher wirkender Zugkraft in liegender Position verbleibt.

Eine konstruktiv vorteilhafte Ausgestaltung sieht vor, dass zumindest eine oder mehrere Rollen eines Raupenlaufwerks über Gestänge an den Laufwerkkörper angelenkt sind. Ein Gestänge kann dabei aus einem oder mehreren miteinander verbundenen Halteelementen bestehen und zur Anlenkung einer oder mehrerer Rollen dienen.

Gemäß einer bevorzugten Weiterbildung sind die vordere Umlenkrolle sowie eine bezogen auf die Fahrzeuglängsachse dahinter liegende Stützrolle über eine gemeinsame Stützanordnung mit dem Laufwerkkörper verbunden, wobei der Stützanordnung ein Federelement zu deren Federung gegenüber dem Laufwerkkörper zugeordnet ist. Vorteilhaft wird durch diese Stützanordnung eine virtuelle Vorderachse gebildet. Diese kann bevorzugt so ausgestaltet sein, dass die Stützanordnung eine am Laufwerkkörper angelenkte Längsschwinge und einen an die Längsschwinge angelenkten Ausleger umfasst, wobei die vordere Umlenkrolle am Ausleger und die Stützrolle an der Längsschwinge gelagert ist und wobei dem Ausleger eine Spanneinrichtung, vorzugsweise in Form eines mit Fluiddruck beaufschlagbaren Zylinders zum Aufbringen einer Spannung im Raupenband zugeordnet ist. Es sei darauf hingewiesen, dass verschiedene, auch davon abweichende Gestaltungen für eine virtuelle Vorderachse denkbar sind.

Die Erfindung wird nachfolgend anhand beigefügter Zeichnungen näher erläutert. Daraus ergeben sich auch weitere vorteilhafte Effekte und Wirkungen der Erfindung. In der Zeichnung zeigt:
- Fig. 1: einen landwirtschaftlichen Schlepper mit Raupenlaufwerk in schematischer Ansicht von der Seite,
- Fig. 1a: einen vorderen Teil eines Raupenlaufwerks, das gegenüber dem Raupenlaufwerk des Fig. 1 gezeigten Schleppers eine veränderte Anlenkung der vorderen Rollen aufweist,
- Fig. 1b: einen vorderen Teil eines Raupenlaufwerks, das gegenüber dem Raupenlaufwerk des Fig. 1 gezeigten Schleppers eine nochmals veränderte Anlenkung der vorderen Rollen aufweist,
- Fig. 2a: das Raupenfahrwerk des in Fig. 1 gezeigten Schleppers mit angegebener innerer Aufteilung des Laufwerks,
- Fig. 2b: das Raupenfahrwerk des in Fig. 1 gezeigten Schleppers bei normaler Zugbelastung,
- Fig. 2c: das Raupenfahrwerk des in Fig. 1 gezeigten Schleppers bei Überlast,
- Fig. 3a: ein Raupenfahrwerk eines Schleppers mit veränderlicher innerer Aufteilung bei Straßenfahrt,
- Fig. 3b: ein Raupenfahrwerk eines Schleppers mit veränderlicher innerer Aufteilung bei Feldfahrt.

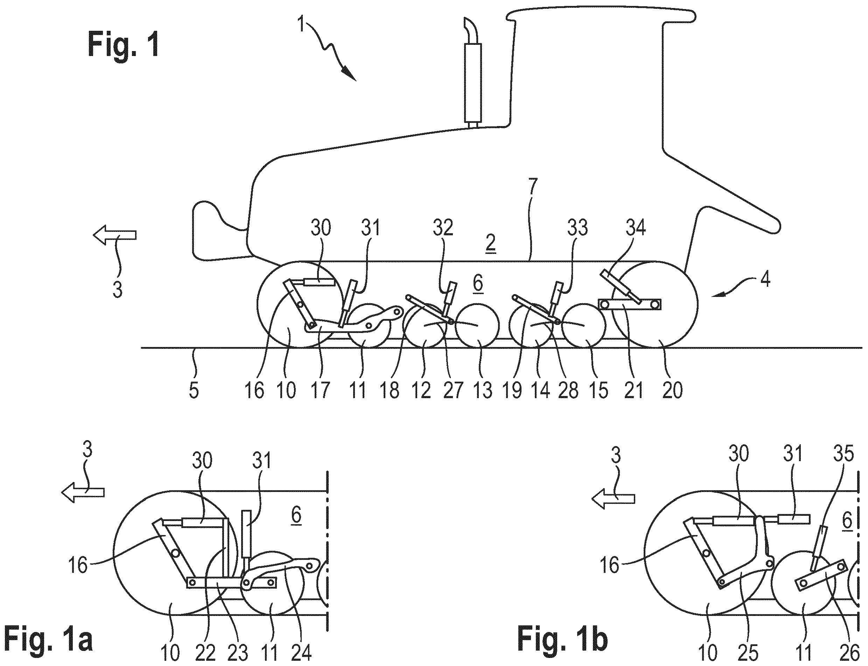

Fig. 1 zeigt in einer schematischen Ansicht von der Seite einen erfindungsgemäßen landwirtschaftlichen Schlepper 1 bei Fahrt über den Boden 5. Der Schlepper 1 ist in Vollraupenbauweise konzipiert und weist eine Fahrzeugstruktur in Form eines Fahrzeugrahmens 2 auf. An den Fahrzeugrahmen 2 ist in Bezug auf eine (durch einen Pfeil angedeutete) Fahrzeuglängsachse 3 beidseitig, d.h. links- und rechtsseitig des Fahrzeugrahmens 2, jeweils ein Raupenlaufwerk 4 angebaut, wobei sich der Schlepper ausschließlich über die beiden Raupenlaufwerke 4 gegenüber dem Boden 5 abstützt. Aufgrund der seitlichen Darstellung ist in Fig. 1 nur das - bezogen auf die Fahrzeuglängsachse 3 - linke Raupenlaufwerk 4 zu sehen. Ein zu dem dargestellten linken Raupenlaufwerk 4 baugleiches rechtes Raupenlaufwerk befindet sich entsprechend auf der rechten Seite des Fahrzeugrahmens 2. Da die beiden Raupenlaufwerke baugleich sind, gelten nachfolgend für das linke Raupenlaufwerk 4 gemachte Ausführungen gleichermaßen für das rechte Raupenlaufwerk.

Zur Durchführung bestimmungsgemäßer Arbeiten wie beispielsweise Zugarbeit ist der Schlepper 1 auf für sich bekannte und daher hier nicht näher gezeigte Weise mit wenigstens einer geeigneten Kupplungseinrichtung ausgestattet, so dass sich mit dem Schlepper 1 ein Arbeitsgerät (beispielsweise ein Bodenbearbeitungsgerät wie ein Pflug) ziehen lässt. Es sei angemerkt, dass die Erfindung hier am Beispiel eines Schleppers 1 beschrieben wird, jedoch nicht auf diesen Typ eines landwirtschaftlichen Fahrzeugs beschränkt ist. Alternativ könnte es sich bei dem Fahrzeug beispielsweise um eine selbstfahrende Erntemaschine wie einen Mähdrescher, Feldhäcksler, eine Ballenpresse handeln.

Wie in Fig. 1 angedeutet, weist das Raupenlaufwerk 4 des Schleppers 1 einen Laufwerkkörper 6 auf. Dieser ist starr mit dem Fahrzeugrahmen 2 verbunden, beispielsweise über eine Flanschverbindung. An den Laufwerkkörper 6 sind mittels noch zu erläuternder Gestänge angelenkt: eine vordere Umlenkrolle 10, eine hintere Umlenkrolle 20 sowie mehrere (hier: fünf) dazwischen liegende Stützrollen 11, 12, 13, 14, 15. Es sei darauf hingewiesen, dass es statt der gezeigten Ausführung (mit an den Fahrzeugrahmen 2 angebautem Laufwerkkörper 6) denkbar ist, dass der Laufwerkkörper eines Raupenlaufwerks jeweils integraler Bestandteil der Fahrzeugstruktur ist. In diesem (nicht gezeigten) Fall wären die Umlenk- und Stützrollen an die - hier auch als Laufwerkkörper dienende - Fahrzeugstruktur angelenkt.

Im gezeigten Ausführungsbeispiel der Fig. 1 umschlingt ein endlos geschlossenes Raupenband 7 im vorderen Bereich des Raupenlaufwerks 5 hälftig (d.h. mit einer Umschlingung von 180°) die vordere Umlenkrolle 10 und im hinteren Bereich des Raupenlaufwerks 5 hälftig die hintere Umlenkrolle 20. Die Stützrollen 11, 12, 13, 14, 15 weisen gleiche Durchmesser auf, wobei die Drehpunkte der Stützrollen 11, 12, 13, 14, 15 - im dargestellten Zustand - auf einer gedachten Linie liegen, so dass sämtliche der fünf Stützrollen 11, 12, 13, 14, 15 zusammen mit der vorderen Umlenkrolle 10 und der hinteren Umlenkrolle 20 auf einem unteren, am Boden 5 liegenden Abschnitt des Raupenbands 7 abrollen. Der Laufwerkkörper 6 stützt sich somit mittels der insgesamt sieben Rollen 10, 11, 12, 13, 14, 15, 20 auf dem unteren Abschnitt des Raupenbands 7 ab. Es sei angemerkt, dass die Umlenk- und Stützrollen auch von dem gezeigten Ausführungsbeispiel abweichende Größenverhältnisse aufweisen können. Insbesondere können die vordere und hintere Umlenkrolle unterschiedlich groß sein. Weiterhin können die Stützrollen untereinander verschieden groß sein.

Zum Übertragen von Antriebsleistung auf das Raupenlaufwerk 4 ist zweckmäßigerweise die hintere Umlenkrolle 20 über einen (nicht dargestellten) Antriebsstrang antreibbar. Zur Gewährleistung einer für den sicheren Betrieb nötigen Bandspannung ist der vorderen Umlenkrolle 10 eine Spanneinrichtung zugeordnet. Diese umfasst einen hydraulisch mit Druck beaufschlagbaren Zylinder 30, der sich am Laufwerkkörper 6 abstützt und über ein Gestänge (im Wesentlichen Ausleger 16) die Position der vorderen Umlenkrolle 10 beeinflussen kann, um durch Aufbringen einer bezogen auf das Raupenband 7 nach außen (hier konkret: nach vorn) gerichteten Kraft das Raupenband 7 unter Spannung zu halten.

Zur gleichmäßigen Abstützung über einen Großteil der Laufwerkslänge auch bei unterschiedlichen Ballastierungen und Zugkräften, zur Verringerung des Verschleißes des Raupenbands bei Straßenfahrt sowie allgemein zur Steigerung des Fahrkomforts sind bei dem Schlepper 1 sämtliche Rollen 10, 11, 12, 13, 14, 15, 20 des Raupenlaufwerks 4 gegenüber dem Laufwerkkörper 6 gefedert. Dazu ist einer einzelnen Rolle 20 oder einer Gruppe von Rollen 10, 11; 12, 13; 14, 15 jeweils ein besonderes Federelement 31, 32, 33, 34 zugeordnet, wobei es sich um fluidbeaufschlagbare Federelemente, bevorzugt um Hydrops mit Niveauregelung handelt, die sich an einem Ende gegenüber dem Laufwerkkörper 6 abstützen und die an einem gegenüberliegenden Ende jeweils mit einem Gestänge verbunden sind, an welches eine oder zwei Rollen angelenkt sind. Gegenüber Stahl- oder Gummifedern, deren Kennlinien stets dem höchsten Lastfall genügen müssen, bieten fluidbeaufschlagte Federelemente (wie Hydrops) den Vorteil einer weicheren Abstimmung und einer Lastanpassbarkeit. Zudem lässt sich deren Dämpfung in weitem Maße variieren.

Die vordere Umlenkrolle 10 ist an einem länglichen Ausleger 16 drehbar gelagert. Ein oberes Ende des Auslegers 16 ist mit dem Bandspannzylinder 30 verbunden. Ein gegenüberliegendes Ende des Auslegers 16 ist drehgelenkig mit einer Längsschwinge 17 verbunden. Die Längsschwinge 17 ist an einem hinteren Ende drehbar am Laufwerkkörper 6 gelagert. Ein mit der Längsschwinge 17 in einem mittigen Abschnitt verbundener Zylinder 31 stützt sich am Laufwerkkörper 6 ab, um die Längsschwinge 17 gegenüber dem Laufwerkkörper 6 zu federn. Eine bezogen auf die Fahrzeuglängsachse 3 unmittelbar hinter der vorderen Umlenkrolle 10 befindliche Stützrolle 11 ist drehbar an der Längsschwinge 17 gelagert. Somit werden die vordere Umlenkrolle 10 und die Stützrolle 11 gemeinsam gegenüber dem Laufwerkkörper 6 gefedert, wobei die Federung insbesondere durch Längenveränderung (Einfedern) des Zylinders 31 stattfindet. Der Zylinder 30 hingegen dient vorrangig zur Aufrechterhaltung einer gewünschten Bandspannung.

Bezogen auf die Fahrzeuglängsrichtung 3 befindet sich hinter der Stützrolle 11 ein Paar weiterer hintereinander angeordneter Stützrollen 12, 13. Diese sind über eine eine Längsschwinge 18 und einen Pendelarm 27 umfassende Struktur an den Laufwerkkörper 6 angelenkt. Dazu ist die Längsschwinge an deren oberem Ende drehbar am Laufwerkkörper 6 gelagert und nimmt an einem gegenüberliegenden Ende einen bogenförmigen Pendelarm 27 um einen mittigen Anlenkpunkt schwenkbar auf. Jeweils endseitig des Pendelarms 27 ist eine Stützrolle 12 bzw. eine Stützrolle 13 drehbar am Pendelarm 27 gelagert. Ein mit der Längsschwinge 18 verbundener Zylinder 32 stützt sich am Laufwerkkörper 6 ab, um die Längsschwinge 18 sowie den damit verbundenen Pendelarm 27 gegenüber dem Laufwerkkörper 6 zu federn. Durch die kinematische Gestaltung werden die beiden Stützrollen 12, 13 gemeinsam gegenüber dem Laufwerkkörper 6 gefedert, wobei die Federung durch eine Längenveränderung (Einfedern) des Zylinders 32 stattfindet.

In gleicher Weise wie im vorigen Absatz beschrieben, sind die Stützrollen 14, 15 über eine Struktur aus Längsschwinge 19 und Pendelarm 28 an den Laufwerkkörper 6 angelenkt, wobei ein Zylinder 33 die Federung ermöglicht. Der mechanische Aufbau und dessen Wirkung entspricht dem für die Lagerung der Stützrollen 12, 13, weshalb zur Vermeidung von Wiederholungen auf die dortigen Ausführungen verwiesen wird.

Die hintere Umlenkrolle 20 ist mittels einer Längsschwinge 21 gegenüber dem Laufwerkkörper 6 gelagert. Ein bezogen auf die Fahrzeuglängsachse 3 vorderes Ende der Längsschwinge 21 ist mit dem Laufwerkkörper 6 drehbar verbunden. An einem gegenüberliegenden (hinteren) Ende der Längsschwinge 21 ist die hintere Umlenkrolle 20 drehbar gelagert. Ein mit der Längsschwinge 21 in einem mittigen Abschnitt verbundener Zylinder 34 stützt sich am Laufwerkkörper 6 ab, um die Längsschwinge 21 gegenüber dem Laufwerkkörper 6 zu federn. Somit wird die hintere Umlenkrolle 20 gegenüber dem Laufwerkkörper 6 gefedert, wobei die Federung durch Längenveränderung (Einfedern) des Zylinders 34 stattfindet.

Die in Fig. 1 gezeigte kinematische Struktur des Raupenlaufwerks 7, insbesondere die Anlenkung einzelner Rollen zum Laufwerkkörper 6, die Zuordnung von Rollen zu Federelementen, die Anzahl von Rollen etc., kann vom Ausführungsbeispiel auf vielfältige Weise abweichend gestaltet sein. In den Fig. 1a und 1b ist beispielhaft jeweils eine geänderte Anlenkmöglichkeit für die vorderen Rollen 10, 11 gezeigt.

Gemäß der in Fig. 1a gezeigten Variante kommt statt der länglichen Längsschwinge 17 (vgl. Fig. 1) eine Anordnung aus einer Längsschwinge 24 und einem damit gelenkig verbundenen T-förmigen Bauteil, umfassend einen Längsträger 23 und eine damit starr verbundene vertikale Stütze 22, zum Einsatz. Im Unterschied zur Anordnung gemäß Fig. 1 greift der Zylinder 31 in einem Verbindungspunkt zwischen der Längsschwinge 24 und dem Längsträger 23 an.

Gemäß der in Fig. 1b gezeigten Variante sind vordere Umlenkrolle 10 und das nachfolgende Stützrad 11 separat gegenüber dem Laufwerkkörper 6 gelagert. Der Ausleger 16, an dem die vordere Umlenkrolle 10 gelagert ist, ist nun mit einer gewinkelten Federschwinge 25 verbunden, die in einem mittigen Bereich drehbar gegenüber dem Laufwerkkörper 6 gelagert ist. Zur Federung der vorderen Umlenkrolle 10 dient wieder ein Zylinder 31, der nun jedoch an einem oberen Ende der Federschwinge 25 angreift. Die Stützrolle 11 ist mittels einer separaten Längsschwinge 26 gegenüber dem Laufwerkkörper 6 gelagert, zur Federung der Stützrolle 11 dient ein eigener (zusätzlicher) Zylinder 35.

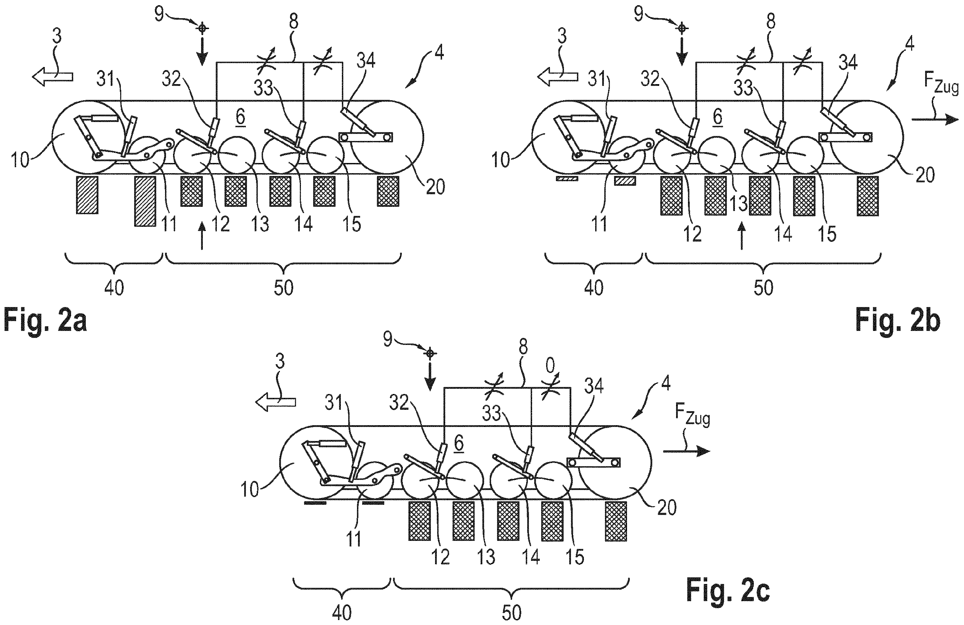

Die Funktionsweise des in seiner mechanischen Struktur anhand von Fig. 1 beschriebenen Schleppers 1 wird nachfolgend anhand der Fig. 2a, 2b, 2c näher erläutert, die aus Darstellungsgründen jeweils nur das Raupenlaufwerk 4 in verschiedenen Einsatzsituationen zeigen. Die hydraulische Anbindung sowie die Lastverteilung unterhalb des Raupenfahrwerks sind schematisch dargestellt.

Fig. 2a zeigt das Raupenfahrwerk 4 des in Fig. 1 gezeigten Schleppers 1 einschließlich einer inneren Aufteilung des Laufwerks. Zunächst ist zu sehen, dass der Rolle 20 sowie den Paaren von Rollen 10, 11; 12, 13; 14, 15 jeweils ein fluidbeaufschlagbares Federelement in Form eines Zylinders 31, 32, 33, 34 ("Hydrop") zugeordnet ist. Insbesondere ist der Rolle 20 das Federelement 34 zugeordnet, ist dem Rollenpaar 10, 11 das Federelement 31 zugeordnet, ist dem Rollenpaar 12, 13 das Federelement 32 zugeordnet und ist dem Rollenpaar 14, 15 das Federelement 33 zugeordnet.

Wie in Fig. 2a dargestellt, ist das Federelement 31 einer vorderen Federungseinheit 40 zugeordnet, die eine virtuelle Vorderachse 40 des (hier nicht vollständig gezeigten) Schleppers 1 bildet. Hingegen sind die Federelemente 32, 33, 34 einer hinteren Federungseinheit 50 zugeordnet, die eine virtuelle Hinterachse 50 des Schleppers 1 bildet. Das Raupenlaufwerk 4 ist somit im Innern in zwei Einheiten aufgeteilt, die wie eine Vorderachse 40 und eine Hinterachse 50 wirken. Durch die unterschiedlichen wirksamen Längen der virtuellen Achsen (bezogen auf die jeweilige Auflagefläche) liegt im gezeigten Fall die Bezeichnung "vorderes Rad" (=Vorderachse 40) und "hintere Raupe" (=Hinterachse 50) nahe.

Der Zylinder 31 der virtuellen Vorderachse 40 weist eine eigene (nicht näher dargestellte) Hydraulikversorgung auf, so dass dessen Auflagedruck separat einstellbar ist. Die Zylinder 32, 33 und 34 sind hingegen an einen gemeinsamen Hydraulikkreis 8 angeschlossen. Dabei ist an einer Verbindungsleitung zwischen dem Zylinder 32 und dem Zylinder 33 ein Sperrventil angeordnet und ist an einer Verbindungsleitung zwischen dem Zylinder 33 und dem Zylinder 43 ein Sperrventil angeordnet. In dem in Fig. 2a gezeigten Zustand sind beide Sperrventile geöffnet, so dass sich im Hydraulikkreis 8 befindliche Hydraulikflüssigkeit frei und mit gleichem Druck auf die Zylinder 32, 33, 34 verteilen kann. Ein vom Schwerpunkt 9 des (hier nicht vollständig dargestellten) Schleppers 1 auf das Laufwerk 4 ausgeübter Auflagedruck wird teilweise von der virtuellen Vorderachse 40 und teilweise von der virtuellen Hinterachse 50 aufgenommen. Dabei gewährleistet die Verschaltung der Zylinder 32, 33, 34 vorteilhaft eine gleichmäßige Kraftverteilung unter dem Bereich der virtuellen Hinterachse 50 selbst bei schwankenden äußeren Krafteinflüssen, wie durch die gleich langen Balken unter den Rollen 12, 13, 14, 15, 20 angedeutet.

Zwischen den Rollen 10 und 11, die dem Zylinder 31 zugeordnet sind, herrscht eine ungleiche Kraftverteilung, welche durch die kinematische Gestaltung, insbesondere die Hebelverhältnisse der Haltestruktur verursacht ist.

Fig. 2b zeigt nun einen Zustand, bei dem das Raupenlaufwerk 4 unter Zugbelastung steht, was insbesondere der Fall ist, wenn ein mit dem Raupenlaufwerk 4 ausgestatteter Schlepper 1 Zugarbeit verrichtet, also beispielsweise einen Pflug zieht. Auf vorteilhafte Weise besteht nun (trotz Einwirkung der Zugkraft Fzug) die Möglichkeit, die Vorderachse 40 druckmäßig soweit zu entlasten, dass die Summe der am Raupenlaufwerk 4 wirksamen Momente zu null (oder nahezu null) wird. Dies ist möglich durch die separate hydraulische Versorgung der virtuellen Vorderachse 40 gegenüber der virtuellen Hinterachse 50. Die Kraftverteilung unter dem Bereich der Hinterachse 50 bleibt wegen der Zusammenschaltung der Zylinder 32, 33, 34 dabei - selbst unter veränderlicher Zugkraft F_{Zug} - konstant (wieder: gleich lange Balken unter den Rollen 12, 13, 14, 15, 20), steigt nur in Summe an (aufgrund der reduzierten Traglast der virtuellen Vorderachse 40).

Wird der Schlepper mit einer besonders hohen Zugkraft F_{Zug} betrieben, so kann durch einen besonderen Überlastmodus ein Aufstellen des Raupenlaufwerks 4 verhindert werden. In diesem Zusammenhang sei auf Fig. 2c verwiesen. Im Unterschied zu den Zuständen gemäß Fig. 2a und 2b ist im Überlastmodus (Fig. 2c) ein zwischen den Zylindern 33 und 34 angeordnetes Sperrventil geschlossen (angedeutet durch: "0"). Der Zylinder 34 lässt sich nun individuell - d.h. hydraulisch entkoppelt von den Zylindern 32, 33 - mit einem erhöhten Hydraulikdruck beaufschlagen. Durch eine individuelle Ansteuerung kann der Zylinder 34 (auch bei Einfederung des Schleppers 1 insgesamt) eine erhöhte Kraft aufbringen, wie in Fig. 2c durch den längeren Balken unterhalb der Rolle 20 gegenüber den gleich langen Balken unterhalb der Rollen 12, 13, 14, 15 angedeutet. Durch die erhöhte Zylinderkraft 34 verschiebt sich der Pendelpunkt des Raupenfahrwerks 4 nach hinten, wodurch ein Aufstellen des Raupenfahrwerks 4 verhindert oder wenigstens deutlich erschwert wird.

Bei dem in den Fig. 1 bis 2c gezeigten Schlepper 1 ist die Zuordnung der Rollen zu virtueller Vorder- und Hinterachse 40 bzw. 50 baulich vorgegeben, damit also dauerhaft. Alternativ dazu ist auch eine veränderliche Zuordnung von Rollen zu - grundsätzlich beliebig vielen - virtuellen Achsen denkbar.

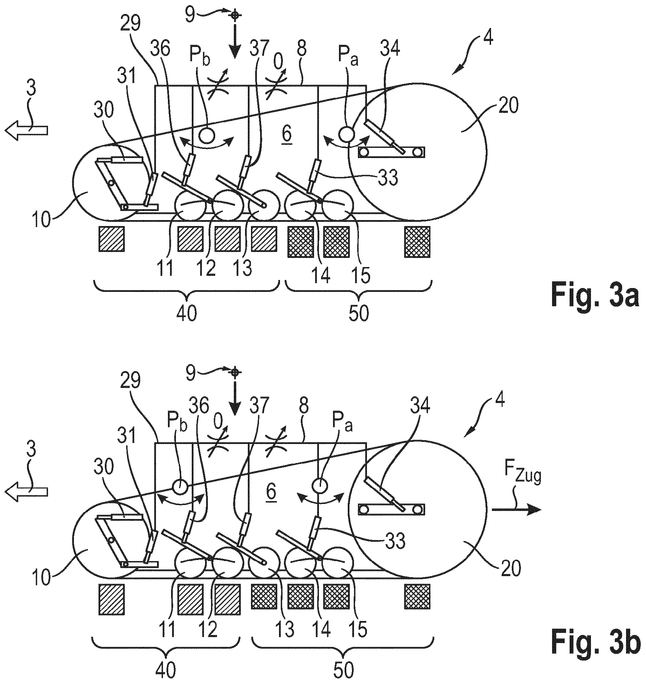

In den Fig. 3a und 3b ist ein Raupenfahrwerk 4 eines Schleppers mit veränderlicher Zuordnung zumindest einer mittigen Stützrolle 13 in verschiedenen Betriebszuständen (Straßen- und Feldfahrt) dargestellt. Das Raupenfahrwerk 4 gemäß Fig. 3a und 3b weist eine nachfolgend erläuterte Struktur auf:
Die vordere Umlenkrolle 10 ist über einen eigenen Zylinder 31 gefedert, die hintere Umlenkrolle 20 ist über einen eigenen Zylinder 34 gefedert. Ein vorderes Paar von Stützrollen 11, 12 ist gemeinsam über einen Zylinder 36 gefedert, ein hinteres Paar von Stützrollen 14, 15 ist gemeinsam über einen Zylinder 33 gefedert. Eine bezogen auf die Fahrzeuglängsachse 3 zwischen der Stützrolle 12 und der Stützrolle 14 angeordnete Stützrolle 13 ist über einen eigenen Zylinder 37 gefedert.

Die vorderen Zylinder 31, 36 gehören einem ersten Hydraulikkreis 29 an und werden stets mit gleichem Druck beaufschlagt; die hinteren Zylinder 33, 34 gehören einem zweiten Hydraulikkreis 8 an und werden stets mit gleichem Druck beaufschlagt. Über Sperrventile lässt sich der Zylinder 37 wahlweise dem ersten Hydraulikkreis 29 zuschalten, wie in Fig. 3a gezeigt, oder dem zweiten Hydraulikkreis 8 zuschalten, wie in Fig. 3b gezeigt. Das Raupenfahrwerk 4 weist somit eine hydraulische Versorgung auf, wonach sich der Zylinder 37 entweder zusammen mit den Zylindern 31, 36 zu einer vorderen Federungseinheit (virtuelle Vorderachse 40) oder mit den Zylindern 33, 34 zu einer hinteren Federungseinheit (virtuelle Hinterachse 50) zusammenschalten lässt.

Auch hier wird innerhalb einer Federungseinheit (virtuelle Vorder- oder Hinterachse) eine gleichmäßige Verteilung der Auflagekräfte durch die Zusammenschaltung zugehöriger Zylinder erreicht, wie durch die jeweils gleich langen Balken unter zusammengehörigen Zylindern dargestellt. Durch die Möglichkeit der veränderlichen Zuordnung des Zylinders 37 zu Vorder- oder Hinterachse kann die auf dem Raupenlaufwerk 4 lastende Gewichtskraft umverteilt werden, um Druckspitzen abzubauen. Dies kann abhängig vom Lastfall (mit oder ohne Zugkraft) und/oder vom Fahrzustand (Feldfahrt, Straßenfahrt) des Schleppers erfolgen. Somit ist eine Anpassung der Druckverteilung unter dem Raupenlaufwerk 4 unabhängig von der Ballastierung des Gesamtfahrzeugs Schlepper möglich.

Durch das Generieren verschiedener hydraulischer Kreise werden für jede virtuelle Achse 40, 50 in deren Lage veränderliche Pendelpunkte Pₐ, P_{b} erzeugt. Im Zustand gemäß Fig. 3a (Zuordnung des Zylinders 37 zum ersten Hydraulikkreis 29) weist der der Vorderachse 40 zugeordnete Fluidkreis 29 den Pendelpunkt P_{b} auf, während der der Hinterachse 50 zugeordnete Fluidkreis 8 den Pendelpunkt Pₐ aufweist.

Im Unterschied zu Fig. 3a sind im Zustand gemäß Fig. 3b (Zuordnung des Zylinders 37 zum zweiten Hydraulikkreis 8) der Pendelpunkt P_{b} der Vorderachse 40 und auch der Pendelpunkt Pₐ jeweils deutlich nach vorn verschoben.

Grundsätzlich ist es denkbar, die Zuordnung des Zylinders 37 zu Vorder- oder Hinterachse manuell von einem Fahrzeugbediener vorzugeben. Bevorzugt kann der beabsichtigte Druckausgleich zwischen Vorderachse 40 und Hinterachse 50 automatisiert, insbesondere abhängig von Betriebsparametern des Schleppers 1 wie Drucklast und/oder Fahrzustand erfolgen. Dazu können den Zylindern 31, 33, 34, 36, 37 Sensoren zur Druckerfassung zugeordnet sein, wobei die Zuordnung der Stützrolle 13 abhängig vom erfassten Druckzustand erfolgt. Überschreitet dann beispielsweise ein erfasster Druckunterschied zwischen Vorderachse 40 und Hinterachse 50 eine vorgebbare Grenze, so wird der Zylinder 37 der mittigen Stützrolle 13 jeweils der Achse zugeordnet, an welcher der zu hohe Hydraulikdruck anliegt, um so das Druckgefälle zwischen den Achsen 40, 50 zu verringern. Vorteilhaft ist bei einer solchen Art von Regelung eine Hysterese vorgesehen, um ein ständiges Umschalten bei nur geringen Schwankungen um eine Grenzwert zu verhindern. Weitere Eingangsgrößen in eine solche Regelung könnten Betriebsparameter wie der absolute Druck, die auftretenden Kräfte an Stützrollen 11, 12, 13, 14, 15, die Fahrgeschwindigkeit oder dergleichen sein.

Der Verschleiß des Raupenbands 7 bei Straßenfahrt kann vorteilhaft dadurch verringert werden, dass in einem Straßenmodus die Zylinder der virtuellen Vorderachse 40 mit einem gegenüber einem Feldmodus verminderten Druck beaufschlagt werden. Alternativ oder ergänzend besteht die Möglichkeit, die auf die erste Rolle wirkende Kraft gegenüber den weiteren Rollen derselben Achse über die Auslegung der Hydraulik und/oder Mechanik zu senken.

Der durch die Erfindung beschriebene Schlepper - einschließlich verschiedener erläuterter Varianten - ist gegenüber Knicklenkern kompakter, wendiger und somit auch für kleinere Felder einsetzbar. Der Grundaufbau als Zweiraupenschlepper ermöglicht das Wenden um eine Raupe oder sogar um die Fahrzeug-Hochachse.

Gegenüber klassischen Zweiraupenschleppern vermindert sich die Notwendigkeit präziser Ballastierung. Der Anwender braucht die Ballastierung des Fahrzeugs nur grob vorzunehmen, durch Abschätzung des Schlupfes unter dem Raupenlaufwerk bzw. durch optische Beurteilung. Der hintere Teil des Raupenlaufwerks weist im normalen Betriebsbereich eine homogene Kraftverteilung auf. Die Last auf dem vorderen Teil ist bei einer Konzipierung gemäß Fig. 2a bis 2c klein, trägt aber dennoch zur Triebkraftübertragung bei.

Im Falle des in den Fig. 3a und 3b gezeigten Konzeptes "vordere Raupe - hintere Raupe" ist die Druck- und Kraftverteilung auch unter den vorderen Laufrollen homogen. Außerdem kann das Laufwerk Zugkraftschwankungen, wie sie bei Feldarbeit praktisch immer auftreten, bis zur Unter- oder Überlastung des Fahrzeugs selbständig ausgleichen.

Durch das hydropneumatisch gefederte Raupenlaufwerk ist der Federungskomfort deutlich gesteigert, und durch die verhältnismäßig große Länge des Raupenlaufwerks ist gleichzeitig die Nickanfälligkeit des Fahrzeugs reduziert. Im Vergleich zu klassischen Halbraupenfahrzeugen oder Fahrzeugen mit vier Anbauraupen ist das beschriebene Fahrzeug durch eine Differentiallenkung zudem besser lenkbar. Durch die aktive Ansteuerung der vorderen Rollen kann ein reduzierter Stollenverschleiß erzielt werden. Im Vergleich zum Halbraupenkonzept gemäß der WO 2013/113484 A2 ist beim erfindungsgemäßen Konzept keine Vorderachse notwendig. Damit ist auch keine Abstimmung mit evtl. angetriebenen Rädern auf der Vorderachse nötig und eine Synchronisation zwischen Differentiallenkung der Hinterachse und Lenkung der Vorderachse entfällt ebenso.

Ein weiterer Vorteil dieses Fahrzeugkonzepts ergibt sich aus der großen Aufstandslänge, die es prinzipiell auch für andere landwirtschaftliche Maschinen, wie z.B. Erntemaschinen, nutzbar macht.

### Bezugszeichenliste

- 1: Traktor
- 2: Fahrzeugrahmen
- 3: Fahrzeuglängsachse
- 4: Raupenlaufwerk
- 5: Boden
- 6: Laufwerkkörper
- 7: Raupenband
- 8: Hydraulikkreis
- 9: Schwerpunkt
- 10: vordere Umlenkrolle
- 11: Stützrolle
- 12: Stützrolle
- 13: Stützrolle
- 14: Stützrolle
- 15: Stützrolle
- 16: Ausleger
- 17: Längsschwinge
- 18: Längsschwinge
- 19: Längsschwinge
- 20: hintere Umlenkrolle
- 21: Längsschwinge
- 22: vertikale Stütze
- 23: Längsträger
- 24: Längsschwinge
- 25: Federschwinge
- 26: Längsschwinge
- 27: Pendelarm
- 28: Pendelarm
- 29: Hydraulikkreis
- 30: Bandspannzylinder
- 31: Zylinder
- 32: Zylinder
- 33: Zylinder
- 34: Zylinder
- 35: Zylinder
- 36: Zylinder
- 37: Zylinder

- 40: (virtuelle) vordere Achse
- 50: (virtuelle) hintere Achse
- F_{Zug}: Zugkraft
- Pₐ: hinterer Pendelpunkt
- P_{b}: vorderer Pendelpunkt

## Patentansprüche

1. Landwirtschaftliches Fahrzeug, insbesondere Schlepper (1) oder Erntemaschine, in Vollraupenbauweise mit einer Fahrzeugstruktur (2), an der in Bezug auf eine Fahrzeuglängsachse (3) beidseitig jeweils ein Raupenlaufwerk (4) zur Abstützung des Fahrzeugs (1) gegenüber dem Boden (5) angeordnet ist, wobei ein Raupenlaufwerk (4) umfasst:
einen Laufwerkkörper (6), an den eine vordere Umlenkrolle (10), eine hintere Umlenkrolle (20) und mehrere dazwischen liegende Stützrollen (11, 12, 13, 14, 15) angelenkt sind, und
ein zumindest die vordere Umlenkrolle (10) und die hintere Umlenkrolle (20) umschlingendes, endlos geschlossenes Raupenband (7), auf dem die Stützrollen (11, 12, 13, 14, 15) abrollen,
wobei sämtliche Rollen (10, 11, 12, 13, 14, 15, 20) des Raupenlaufwerks (4) gegenüber dem Laufwerkkörper (6) gefedert sind, indem einer Rolle (10, 11, 13, 20) oder einer Gruppe von Rollen (10, 11, 12, 13, 14, 15) jeweils ein fluidbeaufschlagbares Federelement (31, 32, 33, 34, 35, 36, 37) zu deren Federung gegenüber dem Laufwerkkörper (6) zugeordnet ist, **dadurch gekennzeichnet, dass** zumindest ein Federelement (31, 36, 37) eines Raupenlaufwerks (4) einer vorderen Federungseinheit (40) zugeordnet ist, um eine virtuelle Vorderachse (40) zu bilden, und zumindest ein Federelement (32, 33, 34, 37) desselben Raupenlaufwerks (4) einer hinteren Federungseinheit (50) zugeordnet ist, um eine virtuelle Hinterachse (50) zu bilden.

2. Fahrzeug nach Anspruch 1, **dadurch gekennzeichnet, dass** der Laufwerkkörper (6) jeweils an die Fahrzeugstruktur (2) angebaut ist.

3. Fahrzeug nach Anspruch 1, **dadurch gekennzeichnet, dass** der Laufwerkkörper eines Raupenlaufwerks integraler Bestandteil der Fahrzeugstruktur ist.

4. Fahrzeug nach einem der vorigen Ansprüche, **gekennzeichnet durch** Mittel (8, 29) zur Verteilung eines vom Fahrzeug (1) ausgehenden Auflagedrucks auf einzelne Federelemente (31, 32, 33, 34, 35, 36, 37) und/oder auf eine oder mehrere Gruppen von Federelementen (31, 32, 33, 34, 35, 36, 37).

5. Fahrzeug nach einem der vorigen Ansprüche, **gekennzeichnet durch** ein Fluidsystem (8, 29) zur Versorgung der Federelemente (31, 32, 33, 34, 35, 36, 37), bei dem sich bestimmte, insbesondere ereignisabhängig auswählbare Federelemente (31, 32, 33, 34, 35, 36, 37) in einen separaten Fluidkreis (8; 29) zusammenschalten lassen, um eine Federungseinheit (40, 50) zu bilden.

6. Fahrzeug nach Anspruch 5, **dadurch gekennzeichnet, dass** eine durch einen gemeinsamen Fluidkreis (8, 29) gebildete Federungseinheit (40, 50) einen Pendelpunkt (Pₐ, P_{b}) aufweist, der eine virtuelle Achse (40, 50) des Fahrzeugs (1) bildet.

7. Fahrzeug nach einem der Ansprüche 1 oder 5 bis 6, **dadurch gekennzeichnet, dass** sich wenigstens eine Stützrolle (13) in Abhängigkeit eines Betriebsparameters des Fahrzeugs (1), vorzugsweise der Drucklast und/oder dem Fahrzustand, durch Zuschalten des zugehörigen Federelements (37) zu einem entsprechenden Fluidkreis (8, 29) entweder der virtuellen Vorderachse (40) oder der virtuellen Hinterachse (50) zuordnen lässt.

8. Fahrzeug nach Anspruch 7, **dadurch gekennzeichnet, dass** einzelnen Federelementen (31, 32, 33, 34, 35, 36, 37) Sensoren zur Druckerfassung zugeordnet sind, wobei die Zuordnung der Stützrolle (13) abhängig vom so erfassten Druckzustand eines oder mehrerer Federelemente (31, 32, 33, 34, 35, 36, 37) erfolgt.

9. Fahrzeug nach einem der vorigen Ansprüche, **gekennzeichnet durch** Mittel zur Beeinflussung einer Druckverteilung zwischen vorderen Federelementen (31, 36, 37) und hinteren Federelementen (32, 33, 34, 37) des Raupenlaufwerks (4) in Abhängigkeit erfasster Betriebsparameter des Fahrzeugs (1), wie insbesondere der Zugkraft (Fzug).

10. Fahrzeug nach einem der Ansprüche 1 oder 5 bis 10, **gekennzeichnet durch** Mittel zur Beeinflussung der Fluiddrücke separater Fluidkreise untereinander, insbesondere einem der virtuellen Vorderachse (40) zugehörigen Fluidkreis (29) und einem der virtuellen Hinterachse (50) zugehörigen Fluidkreis (8), und/oder zur Beeinflussung des Fluiddrucks innerhalb eines Fluidkreises (8, 29), jeweils bevorzugt in Abhängigkeit erfasster Betriebsparameter des Fahrzeugs (1).

11. Fahrzeug nach einem der vorigen Ansprüche, **dadurch gekennzeichnet, dass** dieses in einem Straßenmodus betreibbar ist, in welchem Federelemente (31, 36, 37) der virtuellen Vorderachse (40) mit einem gegenüber einem Feldmodus verminderten Druck beaufschlagt werden.

12. Fahrzeug nach einem der vorigen Ansprüche, **dadurch gekennzeichnet, dass** Federelemente (31, 36, 37) der virtuellen Vorderachse (40) mit einem von einer aufgebrachten Zugkraft (Fzug) des Fahrzeugs (1) abhängigen Druck beaufschlagt werden können, insbesondere mit dem Ziel die Summe wirksamer Momente am Raupenlaufwerk (4) betragsmäßig zu verringern, vorzugsweise zu null zu bringen.

13. Fahrzeug nach einem der vorigen Ansprüche, **dadurch gekennzeichnet, dass** sich ein hinteres Federelement (34) des Raupenlaufwerks (4) durch individuelle Ansteuerung mit erhöhtem Fluiddruck beaufschlagen lässt, um im Fall einer besonders hohen Zugkraft (Fzug) ein Aufstellen des Raupenlaufwerks (4) zu verhindern.

14. Fahrzeug nach einem der vorigen Ansprüche, **dadurch gekennzeichnet, dass** eine oder mehrere Rollen (10, 11, 12, 13, 14, 15, 20) über Gestänge (16, 17, 18, 19, 21, 22, 23, 24, 25, 26, 27, 28) an den Laufwerkkörper (6) angelenkt sind.

15. Fahrzeug nach einem der vorigen Ansprüche, **dadurch gekennzeichnet, dass** die vordere Umlenkrolle (10) sowie eine bezogen auf die Fahrzeuglängsachse (3) dahinter liegende Stützrolle (11) über eine gemeinsame Stützanordnung (17; 24) mit dem Laufwerkkörper (6) verbunden sind, wobei der Stützanordnung (17; 24) ein Federelement (31) zu deren Federung gegenüber dem Laufwerkkörper (6) zugeordnet ist.

16. Fahrzeug nach Anspruch 15, **dadurch gekennzeichnet, dass** die Stützanordnung (17) eine am Laufwerkkörper angelenkte Längsschwinge (17) und einen an die Längsschwinge (17) angelenkten Ausleger (16) umfasst, wobei die vordere Umlenkrolle (10) am Ausleger (16) und die Stützrolle (11) an der Längsschwinge (17) gelagert ist und wobei dem Ausleger (16) eine Spanneinrichtung, vorzugsweise in Form eines mit Fluiddruck beaufschlagbaren Zylinders (30) zum Aufbringen einer Spannung im Raupenband (7) zugeordnet ist.

## Claims

1. An agricultural vehicle, in particular a tractor (1) or a harvester, of a full track-laying design comprising a vehicle structure (2), on which a respective track-laying unit (4) is arranged on both sides in relation to a vehicle longitudinal axis (3) for supporting the vehicle (1) with respect to the ground (5), wherein a track-laying unit (4) includes:
a running gear body (6) on which a front deflection roller (10), a rear deflection roller (20) and a plurality of support rollers (11, 12, 13, 14, 15) disposed therebetween are pivotably mounted, and
an endlessly closed track belt (7) which passes around at least the front deflection roller (10) and the rear deflection roller (20) and on which the support rollers (11, 12, 13, 14, 15) roll,
wherein all rollers (10, 11, 12, 13, 14, 15, 20) of the track-laying unit (4) are sprung with respect to the running gear body (6) by a respective spring element (31, 32, 33, 34, 35, 36, 37) which can be acted upon by fluid being associated with a roller (10, 11, 12, 13, 14, 15, 20) or a group of rollers (10, 11, 12, 13, 14, 15) for springing thereof with respect to the running gear body (6), **characterised in that** at least one spring element (31, 36, 37) of a track-laying unit (4) is associated with a front springing unit (40) to form a virtual front axle (40) and at least one spring element (32, 33, 34, 37) of the same track-laying unit (4) is associated with a rear springing unit (50) to form a virtual rear axle (50).

2. A vehicle according to claim 1 **characterised in that** the running gear body (6) is respectively mounted to the vehicle structure (2).

3. A vehicle according to claim 1 **characterised in that** the running gear body of a track-laying unit is an integral component part of the vehicle structure.

4. A vehicle according to one of the preceding claims **characterised by** means (8, 29) for distributing a contact pressure emanating from the vehicle (1) to individual spring elements (31, 32, 33, 34, 35, 36, 37) and/or to one or more groups of spring elements (31, 32, 33, 34, 35, 36, 37).

5. A vehicle according to one of the preceding claims **characterised by** a fluid system (8, 29) for supplying the spring elements (31, 32, 33, 34, 35, 36, 37) in which given spring elements (31, 32, 33, 34, 35, 36, 37) which in particular can be selected in dependence on events can be connected together in a separate fluid circuit (8; 29) to form a springing unit (40, 50).

6. A vehicle according to claim 5 **characterised in that** a springing unit (40, 50) formed by a common fluid circuit (8, 29) has a pendulum point (Pₐ, P_{b}) which forms a virtual axle (40, 50) of the vehicle (1).

7. A vehicle according to one of claims 1 or 5 to 6 **characterised in that** at least one support roller (13) can be associated either with the virtual front axle (40) or the virtual rear axle (50) in dependence on an operating parameter of the vehicle (1), preferably the pressure load and/or the travel state, by connecting the associated spring element (37) to a corresponding fluid circuit (8, 29).

8. A vehicle according to claim 7 **characterised in that** sensors for pressure detection are associated with individual spring elements (31, 32, 33, 34, 35, 36, 37), wherein the association of the support roller (13) is effected in dependence on the pressure state detected **in that** way of one or more spring elements (31, 32, 33, 34, 35, 36, 37).

9. A vehicle according to one of the preceding claims **characterised by** means for influencing a pressure distribution between front spring elements (31, 36, 37) and rear spring elements (32, 33, 34, 37) of the track-laying unit (4) in dependence on detected operating parameters of the vehicle (1), in particular the pulling force (F_{Zug}).

10. A vehicle according to one of claims 1 or 5 to 10 **characterised by** means for influencing the fluid pressures of separate fluid circuits relative to each other, in particular a fluid circuit (29) associated with the virtual front axle (40) and a fluid circuit (8) associated with the virtual rear axle (50) and/or for influencing the fluid pressure within a fluid circuit (8, 29) respectively preferably in dependence on detected operating parameters of the vehicle (1).

11. A vehicle according to one of the preceding claims **characterised in that** it is operable in an on-street mode in which spring elements (31, 36, 37) of the virtual front axle (40) are acted upon with a pressure which is reduced in relation to an on-field mode.

12. A vehicle according to one of the preceding claims **characterised in that** spring elements (31, 36, 37) of the virtual front axle (40) can be acted upon with a pressure dependent on an applied towing force (F_{Zug}) of the vehicle (1), in particular with the aim of quantitatively reducing the total of effective moments at the track-laying unit (4), preferably bringing it to zero.

13. A vehicle according to one of the preceding claims **characterised in that** a rear spring element (34) of the track-laying unit (4) can be acted upon with an increased fluid pressure by individual actuation in order to prevent the track-laying unit (4) from lifting in the case of a particularly high towing force (F_{Zug}).

14. A vehicle according to one of the preceding claims **characterised in that** one or more rollers (10, 11, 12, 13, 14, 15, 20) are pivotably connected to the running gear body (6) by way of linkages (16, 17, 18, 19, 21, 22, 23, 24, 25, 26, 27, 28).

15. A vehicle according to one of the preceding claims **characterised in that** the front deflection roller (10) and a support roller (11) disposed behind same with respect to the vehicle longitudinal axis (3) are connected to the running gear body (6) by way of a common support arrangement (17; 24), wherein associated with the support arrangement (17; 24) is a spring element (31) for springing thereof with respect to the running gear body (6).

16. A vehicle according to claim 15 **characterised in that** the support arrangement (17) includes a longitudinal swing arm (17) pivotably mounted to the running gear body and an arm (16) pivotably mounted to the longitudinal swing arm (17), wherein the front deflection roller (10) is mounted to the arm (16) and the support roller (11) is mounted to the longitudinal swing arm (17) and wherein associated with the arm (16) is a tensioning device, preferably in the form of a cylinder (30) which can be acted upon with fluid pressure, for applying a tension in the track belt (7).

## Revendications

1. Véhicule agricole, en particulier tracteur (1) ou machine de récolte, en version tout-chenillé, comprenant une structure de véhicule (2) sur laquelle est disposé de part et d'autre, par rapport à un axe longitudinal de véhicule (3), un train de roulement à chenilles (4) pour supporter le véhicule (1) par rapport au sol (5), un train de roulement à chenilles (4) comprenant :
un corps de train de roulement (6) sur lequel sont articulés un galet de renvoi avant (10), un galet de renvoi arrière (20) et plusieurs galets de support (11, 12, 13, 14, 15) disposés au milieu, et
une chenille (7) fermée sans fin qui entoure au moins le galet de renvoi avant (10) et le galet de renvoi arrière (20) et sur lequel roulent les galets de support (11, 12, 13, 14, 15),
tous les galets (10, 11, 12, 13, 14, 15, 20) du train de roulement à chenilles (4) étant suspendus par rapport au corps de train de roulement (6) par le fait qu'à chaque galet (10, 11, 13, 20) ou à chaque groupe de galets (10, 11, 12, 13, 14, 15) est associé un élément élastique sollicité par fluide (31, 32, 33, 34, 35, 36, 37) pour sa suspension par rapport au corps de train de roulement (6), **caractérisé en ce qu'**au moins un élément élastique (31, 36, 37) d'un train de roulement à chenilles (4) est associé à une unité de suspension avant (40) pour former un essieu avant virtuel (40), et au moins un élément élastique (32, 33, 34, 37) du même train de roulement à chenilles (4) est associé à une unité de suspension arrière (50) pour former un essieu arrière virtuel (50).

2. Véhicule selon la revendication 1, **caractérisé en ce que** chaque corps de train de roulement (6) est monté sur la structure de véhicule (2).

3. Véhicule selon la revendication 1, **caractérisé en ce que** le corps de train de roulement d'un train de roulement à chenilles fait partie intégrante de la structure de véhicule.

4. Véhicule selon une des revendications précédentes, **caractérisé par** des moyens (8, 29) pour répartir une pression d'appui provenant du véhicule (1) sur des éléments élastiques individuels (31, 32, 33, 34, 35, 36, 37) et/ou sur un ou plusieurs groupes d'éléments élastiques (31, 32, 33, 34, 35, 36, 37).

5. Véhicule selon une des revendications précédentes, **caractérisé par** un système fluidique (8, 29) pour alimenter les éléments élastiques (31, 32, 33, 34, 35, 36, 37), dans lequel des éléments élastiques déterminés (31, 32, 33, 34, 35, 36, 37), en particulier sélectionnables en fonction de l'événement, peuvent être réunis dans un circuit fluidique séparé (8 ; 29) pour former une unité de suspension (40, 50).

6. Véhicule selon la revendication 5, **caractérisé en ce qu'**une unité de suspension (40, 50) formée par un circuit fluidique commun (8, 29) présente un point pendulaire (Pₐ, P_{b}) qui forme un essieu virtuel (40, 50) du véhicule (1).

7. Véhicule selon une des revendications 1 ou 5 à 6, **caractérisé en ce que**, en fonction d'un paramètre d'exploitation du véhicule (1), de préférence de la charge de pression et/ou de l'état de marche, au moins un galet de support (13) peut être associé soit à l'essieu avant virtuel (40), soit à l'essieu arrière virtuel (50) en associant l'élément élastique (37) correspondant à un circuit fluidique (8, 29) correspondant.

8. Véhicule selon la revendication 7, **caractérisé en ce qu'**à des éléments élastiques individuels (31, 32, 33, 34, 35, 36, 37) sont associés des capteurs de détection de pression, l'association du galet de support (13) s'effectuant en fonction de l'état de pression ainsi détecté d'un ou de plusieurs éléments élastiques (31, 32, 33, 34, 35, 36, 37).

9. Véhicule selon une des revendications précédentes, **caractérisé par** des moyens pour influencer une répartition de pression entre des éléments élastiques avant (31, 36, 37) et des éléments élastiques arrière (32, 33, 34, 37) du train de roulement à chenilles (4) en fonction de paramètres d'exploitation détectés du véhicule (1), comme en particulier la force de traction (F_{Zug}).

10. Véhicule selon une des revendications 1 ou 5 à 10, **caractérisé par** des moyens pour influencer mutuellement les pressions fluidiques de circuits fluidiques séparés, en particulier un circuit fluidique (29) associé à l'essieu avant virtuel (40) et un circuit fluidique (8) associé à l'essieu arrière virtuel (50), et/ou pour influencer la pression fluidique à l'intérieur d'un circuit fluidique (8, 29), à chaque fois de préférence en fonction de paramètres d'exploitation détectés du véhicule (1).

11. Véhicule selon une des revendications précédentes, **caractérisé en ce que** celui-ci est exploitable dans un mode route dans lequel des éléments élastiques (31, 36, 37) de l'essieu avant virtuel (40) sont sollicités avec une pression moindre par rapport au mode champ.

12. Véhicule selon une des revendications précédentes, **caractérisé en ce que** des éléments élastiques (31, 36, 37) de l'essieu avant virtuel (40) peuvent être sollicités avec une pression dépendant d'une force de traction exercée (F_{Zug}) du véhicule (1), en particulier dans le but d'abaisser en valeur, de préférence d'amener à zéro, la somme des moments efficaces au niveau du train de roulement à chenilles (4).

13. Véhicule selon une des revendications précédentes, **caractérisé en ce qu'**un élément élastique arrière (34) du train de roulement à chenilles (4) peut, par l'intermédiaire d'une commande individuelle, être sollicité avec une pression fluidique accrue afin d'empêcher un soulèvement du train de roulement à chenilles (4) en présence d'une force de traction (F_{Zug}) particulièrement élevée.

14. Véhicule selon une des revendications précédentes, **caractérisé en ce qu'**un ou plusieurs galets (10, 11, 12, 13, 14, 15, 20) sont articulés au corps de train de roulement (6) par l'intermédiaire de tringleries (16, 17, 18, 19, 21, 22, 23, 24, 25, 26, 27, 28).

15. Véhicule selon une des revendications précédentes, **caractérisé en ce que** le galet de renvoi avant (10) ainsi qu'un galet de support (11) situé derrière par rapport à l'axe longitudinal de véhicule (3) sont reliés au corps de train de roulement (6) par l'intermédiaire d'un agencement de support commun (17 ; 24), à l'agencement de support (17, 24) étant associé un élément élastique (31) pour la suspension de celui-ci par rapport au corps de train de roulement (6).

16. Véhicule selon la revendication 15, **caractérisé en ce que** l'agencement de support (17) comprend une coulisse longitudinale (17) articulée sur le corps de train de roulement et un bras (16) articulé sur la coulisse longitudinale (17), le galet de renvoi avant (10) étant monté sur le bras (16) et le galet de support (11) étant monté sur la coulisse longitudinale (17), et au bras (16) étant associé un dispositif de tension, de préférence en forme de vérin (30) sollicité par de la pression fluidique, pour imposer une tension dans la chenille (7).
